# EUROPEAN PATENT SPECIFICATION

(11) **EP 1 195 238 B1**
(45) Date of publication and mention of the grant of the patent: **12.11.2003**
(21) Application number: 01000510.6
(22) Date of filing: 28.09.2001
(51) Int. Cl.: B29C 70/74

(54) **Method for manufacturing a well having a pipe fitting, and a well**
Schacht mit Anschlussrohr und Verfahren zu dessen Herstellung
Regard avec raccord de tuyauterie et procédé pour sa fabrication

(30) Priority: 06.10.2000 FI 20002208
(43) Date of publication of application: 10.04.2002
(73) Proprietor: Uponor Innovation AB, 513 81 Fristad (SE)
(72) Inventor: Järvenkylä, Jyri, 15870, Hollola (FI)
(74) Representative: Huhtanen, Ossi Jaakko

(56) References cited:
- DE-A- 1 920 133
- DE-A- 3 426 246
- JP-A- 61 294 291
- PATENT ABSTRACTS OF JAPAN vol. 014, no. 473 (M-1035), 16 October 1990 (1990-10-16) & JP 02 190694 A (TOKUSHU KOGYO KK), 26 July 1990 (1990-07-26)
- PATENT ABSTRACTS OF JAPAN vol. 1995, no. 09, 31 October 1995 (1995-10-31) & JP 07 151288 A (SEKISUI CHEM CO LTD), 13 June 1995 (1995-06-13)
- PATENT ABSTRACTS OF JAPAN vol. 1995, no. 02, 31 March 1995 (1995-03-31) & JP 06 331086 A (MITSUBISHI PETROCHEM CO LTD;OTHERS: 01), 29 November 1994 (1994-11-29)
- PATENT ABSTRACTS OF JAPAN vol. 016, no. 487 (M-1323), 9 October 1992 (1992-10-09) & JP 04 179528 A (NISSAN MOTOR CO LTD), 26 June 1992 (1992-06-26)

## Description

The invention relates to as method for manufacturing a well comprising a frame made of plastic and at least one pipe fitting.

The invention also relates to a well comprising a frame made of plastic and at least one pipe fitting.

Wells made of plastic and including at least one pipe fitting are used for example in rainwater and sewage systems. The fitting is used to connect a pipe to the well, and the fitting must therefore be accurately dimensioned and the well must be thoroughly leak-proof.

The plastic wells are typically manufactured using injection moulding in order to provide a pipe fitting that is accurately dimensioned both on the inside and outside. A fitting of a particular size can be used to connect pipes of a particular size in diameter. If a pipe that is different in diameter than the previous ones is attached to the well, then the size of the pipe fitting must correspondingly also be changed. In such a case, a different type of well is needed. Thus, a large number of injection moulds of varying sizes is also required for manufacturing the wells. Injection moulding is a very complicated method and the moulds required in the method are expensive. A complex and expensive injection mould has to be used especially if the pipe fitting is provided with a socket having a sealing groove inside. In order to form an internal sealing groove the injection mould must be provided with a core, which is contracted from the sealing groove after casting. Consequently the wells become very expensive owing to the difficulties in the manufacturing process and to the expensiveness of the method.

A well can also be made in such a manner that a well frame is formed using for example injection moulding, and a hole is made thereto and a pipe fitting is connected to the hole, for instance using electric welding. For instance, DE 1920133 describes a main pipe made of polyethylene having heating element wires embedded directly around an opening of that pipe, DE 3426246 discloses a process and device for connecting a lateral connection piece ("branch pipe") to a main pipe whereas the branch pipe is made of thermoplastic having an electrical heating coil embedded or attached at the fixing end. However, such a solution requires several work phases, and is therefore complex and expensive. It is further very difficult to ensure that the connection between the fitting and the well frame is tightly sealed, since the sectional area between two cylindrical surfaces is small.

Plastic parts can be made at reasonable costs, also using for example rotational casting or blow moulding. However, these methods cannot produce wells provided with pipe fittings, since a fitting that is dimensioned accurately enough cannot be manufactured by means of said methods.

It is an object of the invention to provide a reasonably priced and leak-proof well provided with a fitting and a method for manufacturing said well.

The method of the invention is characterized by forming a pipe fitting, arranging the fitting and a sealing element to a mould for manufacturing a frame, forming the well frame in such a manner that the sealing element and at least a part of the fitting remain within the frame and by tightening the connection between the fitting and the frame with the sealing element before commissioning the well.

The well of the invention is characterized in that the well comprises a sealing element between the pipe fitting and the frame, and that the frame is made such that the sealing element and at least a part of the fitting remain inside the frame during the formation of the frame and that the connection between the fitting and the frame can be tightened using the sealing element.

The essential idea of the invention is to form a pipe fitting and to place the formed fitting and a sealing element into a mould and forming a well frame in such a manner that at least a part of the fitting and the sealing element remain inside the well frame to be formed. The sealing element thereafter ensures that the frame and the fitting are connected together so that the connection between the frame and the fitting is sealed. In other words, a first sealing is formed using molten well material and after the formation of the well frame a second sealing element is activated. The combined use of these two sealing methods provides mechanically firm and leak-proof connections. An idea of a preferred embodiment is that the sealing element is an electric connecting element. Another preferred embodiment presents such an idea that the electric connecting element includes a resistor and foaming material, whereby the foaming material expands when the resistor is heated, thus filling and sealing the connection between the fitting and the well frame.

The invention provides such an advantage that a well provided with an accurately dimensioned pipe fitting can be manufactured at reasonable costs and with minor investments. The fitting can also be tightly connected to the well frame. Furthermore, the solution allows to easily produce wells provided with different pipe fittings, as the same mould can be used for manufacturing the well frames, and only the pipe fitting to be arranged at the mould must be changed when the aim is to manufacture wells provided with different fittings.

In the following the invention will be described in greater detail in the accompanying drawings, in which
Figure 1 is a schematic side view in cross-section showing a well provided with a pipe fitting and
Figure 2 is a schematic top view in cross-section showing a detail of another well.

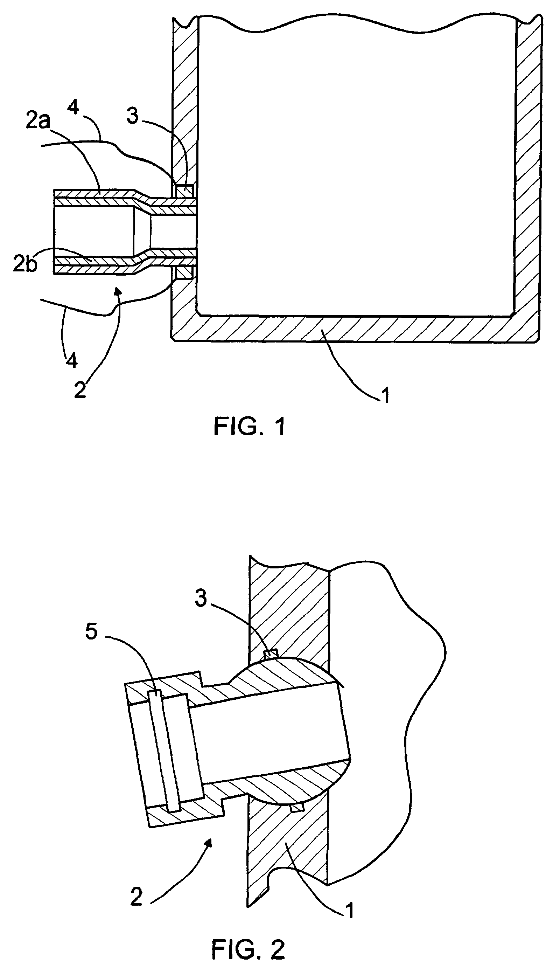

Figure 1 shows a well comprising a frame 1 made of plastic. The material of the frame 1 can be, for example, polyolefin such as polyethene PE or polypropylene PP. The well also comprises one or more pipe fittings 2. An electric connecting element 3 is placed between the pipe fitting 2 and the frame 1.

The well is formed in such a manner that the fitting 2 is at first formed using injection moulding, for example. After this the fitting 2 and the electric connecting element 3 are arranged within the mould so that the electric connecting element 3 circularly surrounds the fitting 2. Then the well frame 1 is formed. Preferably the well frame 1 is formed using rotational casting or blow moulding, as the mould costs, for example, remain reasonable when employing these methods. If desired, the frame can also be formed using some other method such as injection moulding. The electric connecting element and a part of the fitting 2 are moulded inside the well wall, i.e. the frame 1. After forming the frame 1, electric current is fed to the electric connecting element through conductors 4. In the attached drawing the conductors 4 are shown schematically and for the sake of clarity the appended Figures do not show the power source, from which the electric current is fed to the electric connecting element 3. The electric connecting element 3 is provided with a resistor wire that is heated when electric current is conducted to the electric connecting element. The resistor wire heats the material of the frame 1 and the fitting 2, thus welding them tightly together. The electric connecting element 3 thus ensures that the connection between the frame 1 and the fitting 2 is tight.

At least an outermost layer 2a of the fitting 2 must be made of a material that can be welded with the well frame 1 material. The outermost layer 2a of the fitting 2 can thus be made of for example polyolefin such as polyethene PE or polypropylene PP. Since the fitting 2 must endure high temperatures that prevail during injection moulding, rotational casting or blow moulding, the fitting 2 can be formed such that it comprises a composite structure. The fitting 2 may therefore comprise, for example, an inner layer 2b including a fibre reinforcement in the plastic material. Furthermore the fitting 2 may comprise a metal layer. In all, the fitting 2 must be formed such that the inside measure thereof remains accurate and that the fitting 2 endures very high temperatures. The thermal resistance and the mechanical resistance of the fitting 2 should therefore be very good.

The resistor wire of the electric connecting element 3 can be helically arranged. In addition to the resistor wire the electric connecting element 3 may also comprise foaming material. As the resistor wire is heated the foaming material foams and expands and fills the holes possibly found between the fitting 2 and the frame 1. This is an extremely reliable way to ensure that the connection between the fitting 2 and the frame 1 is tightly sealed.

Different fittings 2 can easily be arranged into injection moulding, blow moulding or rotational casting moulds. Then the wells provided with different fittings can be manufactured using a single frame mould. For manufacturing pipe fittings 2 similar moulds can basically be utilized that are used to produce pipe connections used in other parts of the pipe system, for example. The frame mould may be simple and the mould costs therefore remain reasonable even when injection moulding is used, and even if the pipe fitting 2 comprises, for example, an internal sealing groove 5 as shown in Figure 2.

The installer of the well may perform the final sealing of the connection between the frame 1 and the pipe fitting 2 by means of the connecting element 3. The sealing between the frame 1 and the pipe fitting 2 created during the casting phase of the frame 1 may function as such a seal that partly guarantees the waterproofness or at least the silt tightness meaning that the fine earth material cannot penetrate to or from the connection or the well. Such a solution allows to rotate or bend the pipe fitting 2 after mounting the well into the ground so that the pipe fitting can be accurately directed in relation to the pipeline to be connected thereto. Particularly if the part of the pipe fitting 2 to be arranged inside the frame 1 is spherically formed as shown in Figure 2, the pipe fitting can be turned before it is definitively fastened to be stationary as regards the frame 1. When the pipeline to be connected is fastened to the pipe fitting 2, a sealing element is activated and the pipe fitting 2 is locked in position, and an extremely strong and tight connection is achieved that is easy to manufacture. The electric connecting element 3 can also be connected in series with an electric welding sleeve intended to connect the pipe placed outside the fitting 2, whereby the pipe is connected to the pipe fitting 2 at the same time as the pipe fitting 2 is sealed to the well frame 1.

The drawing and the description associated thereto are merely intended to illustrate the inventive idea. The details of the invention may vary within the scope of the claims. Another solution can therefore be used as the sealing element arranged between the fitting 2 and the well frame 1 instead of the electric connecting element 3. The sealing element may include, for example, polyethene and a chemical compound reacting to high frequency heating, such as magnetite. When the sealing element is heated using an induction coil, the magnetite is heated, and a non-polar polyethene that does not react to high frequency heating or another molten glue in the sealing element melts in such a manner that it forms a tightly sealed connection between the fitting 2 and the frame 1.

## Claims

1. A method for manufacturing a well comprising a frame (1) made of plastic and at least one pipe fitting (2), **characterized by** forming a pipe fitting (2), arranging the fitting (2) and a sealing element to a mould for manufacturing a frame, forming the well frame (1) in such a manner that the sealing element and at least a part of the fitting (2) remain within the frame (1) and by tightening the connection between the fitting (2) and the frame (1) with the sealing element before commisioning the well.

2. A method as claimed in claim 1,**characterized in that** the sealing element is an electric connecting element (3), whereby electric current is fed into the electric connecting element (3) in order to seal the connection between the fitting (2) and the frame (1).

3. A method as claimed in claim 2, **characterized in that** the electric connecting element (3) comprises foaming material that expands to seal the connection between the fitting (2) and the frame (1) together.

4. A method as claimed in any one of the preceding claims, **characterized in that** the frame (1) is made of polyolefin and at least an the outermost layer (2a) of the fitting (2) is made of polyolefin.

5. A method as claimed in any one of the preceding claims, **characterized in that** the well frame (1) is formed using rotational casting or blow moulding.

6. A method as claimed in any one of the preceding claims, **characterized in that** the pipe fitting (2) is connected to an external pipeline and thereafter the connection between the fitting (2) and the frame (1) is sealed using a sealing element.

7. A well comprising a frame (1) made of plastic and at least one pipe fitting (2), **characterized in that** the well comprises a sealing element between the pipe fitting (2) and the frame (1), and that the frame (1) is made such that the sealing element and at least a part of the fitting (2) remain inside the frame (1) during the formation of the frame, and that the connection between the fitting (2) and the frame (1) can be tightened using the sealing element.

8. A well as claimed in claim 7, **characterized in that** the sealing element is an electric connecting element (3).

9. A well as claimed in claim 8, **characterized in that** the electric connecting element (3) includes foaming material that can be foamed to tighten the connection between the fitting (2) and the frame (1) together.

10. A well as claimed in any one of claims 7 to 9, **characterized in that** the frame (1) is made of polyolefin and at least an outermost layer (2a) of the fitting (2) is made of polyolefin.

11. A well as claimed in any one of claims 7 to 10, **characterized in that** the frame (1) is formed using rotational casting or blow moulding.

## Patentansprüche

1. Verfahren zum Herstellen eines Schachts oder Behälters mit einem Rahmen (1) aus Kunststoff und mindestens einem Rohrfitting (2),
**gekennzeichnet durch**
Ausbilden eines Rohrfittings (2), wobei der Rohrfitting (2) und ein Dichtungselement zum Herstellen eines Rahmens in einer Form angeordnet werden und der Schacht- oder Behälterrahmen (1) derart ausgebildet wird, dass das Dichtungselement und zumindest ein Teil des Fittings (2) in dem Rahmen (1) verbleiben, und **durch** Abdichten der Verbindung zwischen dem Fitting (2) und dem Rahmen (1) mit dem Dichtungselement vor Inbetriebnahme des Schachts oder Behälters.

2. Verfahren nach Anspruch 1, **dadurch gekennzeichnet, dass** das Dichtungselement ein elektrisches Verbindungselement (3) ist, wobei elektrischer Strom dem elektrischen Verbindungselement (3) zugeführt wird, um die Verbindung zwischen dem Fitting (2) und dem Rahmen (1) abzudichten.

3. Verfahren nach Anspruch 2, **dadurch gekennzeichnet, dass** das elektrische Verbindungselement (3) ein Schaummaterial aufweist, das sich ausdehnt, um die Verbindung zwischen dem Fitting (2) und dem Rahmen (1) abzudichten.

4. Verfahren nach einem der vorhergehenden Ansprüche, **dadurch gekennzeichnet, dass** der Rahmen (1) aus Polyolefin gefertigt ist und zumindest die äußerste Schicht (2a) des Fittings (2) aus Polyolefin gefertigt ist.

5. Verfahren nach einem der vorhergehenden Ansprüche, **dadurch gekennzeichnet, dass** der Schacht- oder Behälterrahmen (1) unter Anwendung des Rotationsgieß- oder Blasformverfahrens ausgebildet wird.

6. Verfahren nach einem der vorhergehenden Ansprüche, **dadurch gekennzeichnet, dass** der Rohrfitting (2) mit einer externen Rohrleitung verbunden wird und danach die Verbindung zwischen dem Fitting (2) und dem Rahmen (1) mit einem Dichtungselement abgedichtet wird.

7. Schacht oder Behälter mit einem Rahmen (1) aus Kunststoff und mindestens einem Rohrfitting (2),
**dadurch gekennzeichnet, dass**
der Schacht oder Behälter ein Dichtungselement zwischen dem Rohrfitting (2) und dem Rahmen (1) aufweist und der Rahmen (1) derart ausgebildet ist, dass das Dichtungselement und zumindest ein Teil des Fittings (2) während des Ausbildens des Rahmens in dem Rahmen (1) verbleiben und dass die Verbindung zwischen dem Fitting (2) und dem Rahmen (1) mit dem Dichtungselement abgedichtet werden kann.

8. Schacht oder Behälter nach Anspruch 7, **dadurch gekennzeichnet, dass** das Dichtungselement ein elektrisches Verbindungselement (3) ist.

9. Schacht oder Behälter nach Anspruch 8, **dadurch gekennzeichnet, dass** das elektrische Verbindungselement (3) ein Schaummaterial aufweist, das aufgeschäumt werden kann, um die Verbindung zwischen dem Fitting (2) und dem Rahmen (1) abzudichten.

10. Schacht oder Behälter nach einem der Ansprüche 7 bis 9, **dadurch gekennzeichnet, dass** der Rahmen (1) aus Polyolefin gefertigt ist und zumindest die äußerste Schicht (2a) des Fittings (2) aus Polyolefin gefertigt ist.

11. Schacht oder Behälter nach einem der Ansprüche 7 bis 10, **dadurch gekennzeichnet, dass** der Rahmen (1) unter Anwendung des Rotationsgießoder Blasformverfahren ausgebildet wird.

## Revendications

1. Procédé de fabrication d'une gaine comprenant une armature (1) réalisée en plastique et au moins un raccord de tuyauterie (2), **caractérisé par** la formation d'un raccord de tuyauterie (2), l'aménagement du raccord (2) et d'un élément d'étanchéité sur un moule pour fabriquer une armature, en formant l'armature de la gaine (1) de telle sorte que l'élément d'étanchéité et au moins une pièce du raccord (2) reste à l'intérieur de l'armature (1) et en resserrant la connexion entre le raccord (2) et l'armature (1) avec l'élément d'étanchéité avant de mettre la gaine en service.

2. Procédé selon la revendication 1, **caractérisé en ce que** l'élément d'étanchéité est un élément de raccordement électrique (3), dans lequel du courant électrique est alimenté dans l'élément de raccordement électrique (3) afin de sceller la connexion entre le raccord (2) et l'armature (1).

3. Procédé selon la revendication 2, **caractérisé en ce que** l'élément de raccordement électrique (3) comprend de la matière de moussage qui se dilate pour sceller la connexion entre le raccord (2) et l'armature (1).

4. Procédé selon l'une quelconque des revendications précédentes, **caractérisé en ce que** l'armature (1) est réalisée en polyoléfine et au moins la couche la plus à l'extérieur (2a) du raccord (2) est réalisée en polyoléfine.

5. Procédé selon l'une quelconque des revendications précédentes, **caractérisé en ce que** l'armature de la gaine (1) est formée au moyen de coulage par rotation ou d'extrusion-soufflage.

6. Procédé selon l'une quelconque des revendications précédentes, **caractérisé en ce que** le raccord de tuyauterie (2) est relié à une canalisation externe et ensuite la connexion entre le raccord (2) et l'armature (1) est colmatée au moyen d'un élément d'étanchéité.

7. Gaine comprenant une armature (1) réalisée en plastique et au moins un raccord de tuyauterie (2), **caractérisé en ce que** la paroi comprend un élément d'étanchéité entre le raccord de tuyauterie (2) et l'armature (1), et **en ce que** l'armature (1) est réalisée de telle façon que l'élément d'étanchéité et au moins une pièce du raccord (2) restent à l'intérieur de l'armature (1) pendant la formation de l'armature, et **en ce que** la connexion entre le raccord (2) et l'armature (1) peut être resserrée au moyen de l'élément d'étanchéité.

8. Gaine selon la revendication 7, **caractérisé en ce que** l'élément d'étanchéité est un élément de raccordement électrique (3).

9. Gaine selon la revendication 8, **caractérisé en ce que** l'élément de raccordement électrique (3) comprend de la matière de moussage qui peut être moussée pour sceller la connexion entre le raccord (2) et l'armature (1).

10. Gaine selon l'une quelconque des revendications 7 à 9, **caractérisé en ce que** l'armature (1) est réalisée en polyoléfine et au moins une couche située le plus à l'extérieur (2a) du raccord (2) est réalisé en polyoléfine.

11. Gaine selon l'une quelconque des revendications 7 à 10, **caractérisé en ce que** l'armature (1) est formée au moyen de coulage par rotation ou d'extrusion-soufflage.
